(19) Europäisches Patentamt / European Patent Office / Office européen des brevets

(11) **EP 1 748 527 A1**

(12) **EUROPEAN PATENT APPLICATION**
published in accordance with Art. 158(3) EPC

(43) Date of publication:
**31.01.2007 Bulletin 2007/05**

(51) Int Cl.:
*H02G 3/04* (2006.01)    *F16L 11/02* (2006.01)

(21) Application number: **05750188.4**

(22) Date of filing: **18.05.2005**

(86) International application number:
**PCT/ES2005/000276**

(87) International publication number:
**WO 2005/114804 (01.12.2005 Gazette 2005/48)**

(84) Designated Contracting States:
**AT BE BG CH CY CZ DE DK EE ES FI FR GB GR HU IE IS IT LI LT LU MC NL PL PT RO SE SI SK TR**

(30) Priority: **19.05.2004 ES 200401196**

(71) Applicant: **RELATS, S.A.**
**08140 Caldes de Montbui (ES)**

(72) Inventors:
• **RELATS MANENT, Jordi**
**E-08140 Caldes De Montbui (Barcelona) (ES)**

• **RELATS CASAS, Pere**
**E-08140 Caldes De Montbui (Barcelona) (ES)**
• **ARTOLA SOLE, Dolors**
**E-08140 Caldes De Montbui (Barcelona) (ES)**
• **FRUNS MARTIN, Anna**
**E-08140 Caldes De Montbui (Barcelona) (ES)**
• **SALAS DURAN, Joaquim**
**E-08140 Caldes De Montbui (Barcelona) (ES)**

(74) Representative: **Maldonado Jordan, Julia**
**Linares, 7**
**46018 Valencia (ES)**

(54)    **PROTECTIVE TUBE**

(57)    The invention relates to a protective tube comprising a plurality of threads which are braided, knit-braided or knitted to one another. The invention is **characterised in that** the length of the cross-section of the threads along a first axis is substantially greater than the length of said cross-section along a second axis which is perpendicular to the first.

Fig.2

**Description**

The invention refers to a thermal and mechanical protective tube for cables, conduits and similar items.

BACKGROUND TO THE INVENTION

The use of braided tubes to protect bunches of cables applicable to assemblies in cars is known. The majority of these braided cables are made from a monofilament threads of polymeric material with a circular cross-section.
The use of these types of threads is advantageous for several reasons. One of them consists of the fact that it allows maximum expansion of the tube's section when the length of same is contracted, allowing the introduction of the bunch of cables inside of the tube and returning to its original section when the force is removed that has been used to contract the length.
Another advantage of this type of thread is that they have high resistance to abrasion from friction.
In addition, in line with the type of polymer material that is used in the manufacture of the threads, the tube has a good resistance to temperature and good thermal insulation.
One of the properties that the braided tubes have to exhibit for the application described is that they must have a high surface cover factor (more than 80%) in order to prevent any of the cables contained being able to cross the tube wall during its protection function, being uncovered and as a consequence, unprotected.
The value for the surface cover factor is determined by a series of variables related to the tube's characteristics, amongst which the diameter of the thread used in the manufacture of the tube has a great influence.
In this way, in order to achieve tubes with a high surface cover factor it is necessary to use monofilaments with a high diameter, with the result that the braided tubes obtained are heavy and have a high cost.

DESCRIPTION OF THE INVENTION

The aim of this present invention is the solving of the disadvantages presented by the devices already known in the present technology, providing a protective tube that is made up of a plurality of threads that are braided, knit-braided or knitted to one another. The invention is characterised in that the length of the cross section of the threads along a first axis or direction is substantially greater than the length of said cross section along a second axis which is perpendicular to the first.
Thanks to these characteristics, a braided tube is obtained with less weight and thus at less cost than the tubes that use circular cross section threads whilst still keeping the other properties: capacity of expansion and retraction, resistance to abrasion and thermal performance without significant changes.
By preference, the length of the cross section in the first axis is at least 1.5 times greater than the length of said cross section of the second axis that is perpendicular to said first axis.
Advantageously, the threads of the tube are made from a polymeric material.
According to another aspect of the invention, the polymeric material used for said threads can be polyamide, polyester, polypropylene, polyethylene or phenylen polysulphide.

BRIEF DESCRIPTION OF THE INVENTION

In order to make the description easier in regard to that stated above some drawings are attached in which, in form of an outline has been shown by way of example but not by way of being a limitation, a practical case of an embodiment of the tube of the invention is included, in which:

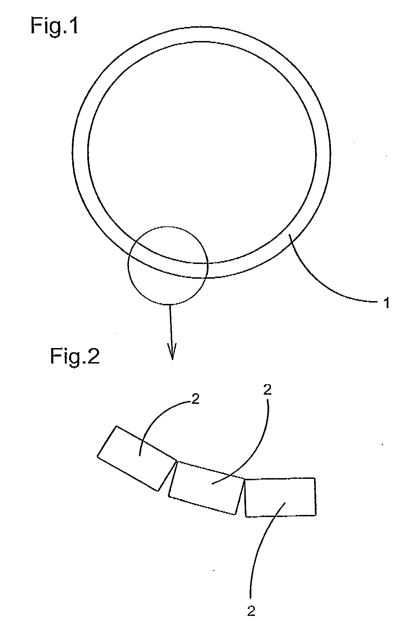

Figure 1 is an outline transversal cross section of the protective tube of the present invention; and
Figure 2 is a detail of one of the threads that make up the tube of this present invention.

**DESCRIPTION OF A PREFERRED EMBODIMENT**

As and how can be appreciated in the figures, the tube (1) of this present invention comprises a plurality of threads (2) which are braided, knit-braided, or knitted to one another. In the embodiment these threads (2) have a rectangular cross section, even though said cross section could have an oval, polygonal or any other shape that fulfils the necessary conditions.
Thanks to said arrangement, the threads (2) cover the cables disposed on the inside of the tube (1) in a more effective manner, the thickness of same being much less than that used for circular cross section threads.
A practical case is described below in which the advantages of the tube of the present invention are shown.
According to the section 5.4 of the Volvo STD 7821.2 Standard, the superficial cover factor (K) of a braided tube using monofilament type threads has been calculated by the following formula:

$$K = 100 . (2 . F - F^2)\% \text{ in which } F = (N.P.d) / (25.sen \; \alpha)$$

and

$$tg \; a = 2.\pi. \; (D+2d).P/(C.25)$$

Where:

F = fill factor
N = Number of monofilament threads per coil
P = number of crosses per 25 mm
d = diameter of monofilament in mm
$\alpha$ = braiding angle in degrees in regard to the longitudinal axis
D = diameter situated on the inside of the braiding in mm
C = number of machine coils to be braided

In order to use said tubes in cars for the protection of cables and similar items, the superficial cover factor K must be not less than 80%.

The values obtained with a standard tube made respectively with circular cross section threads and with rectangular cross section threads are as follows:

Standard Tube

Polymer that makes up the threads: polyester
Dimension of the threads: 0.22 mm diameter
N° of machine coils to be braided: 80
N° of threads per coil: 3
N° of crosses in the braiding: 15/30 mm
Nominal diameter of the tube: 20 mm
Maximum expansion diameter of the tube: 27 mm
Tube lineal metre weight: 17 gr
Superficial cover factor: 78%

**Tube made out of rectangular cross-section threads**
Polymer that makes up the threads: polyester
Dimension of the threads: 0.14 x 0.26 mm diameter
N° of machine coils to be braided: 80
N° of threads per coil: 3
N° of crosses in the braiding: 15/30 mm
Nominal diameter of the tube: 20 mm
Maximum expansion diameter of the tube: 27 mm
Tube lineal metre weight: 17 gr
Superficial cover factor: 86% (taking 0.26 mm as the monofilament diameter in the formula)

As can be seen, with the preferred embodiment stated an increase in the superficial cover factor of the braided tube is achieved of 10%, keeping the lineal metre weight of the same.

**Claims**

1.   Protective tube (1) comprising a plurality of threads (2) which are braided, knit-braided, or knitted to one another, **characterised in that** the length of the cross section of the threads (2) along a first axis is substantially greater than the length of said cross section along a second axis which is perpendicular to the first.

**2.** Tube (1) according to Claim 1, **characterised in that** the length of the cross section of the first axis is at least 1.5 times greater than the length of said cross section of the second axis which is perpendicular to the first.

**3.** Tube (1) according to Claims 1 or 2, **characterised in that** said threads (2) are made from a polymeric material.

**4.** Tube (1) according to Claim 3, **characterised in that** said polymeric material is polyamide.

**5.** Tube (1) according to Claim 3, **characterised in that** said polymeric material is polyester.

**6.** Tube (1) according to Claim 3, **characterised in that** said polymeric material is polypropylene.

**7.** Tube (1) according to Claim 3, **characterised in that** said polymeric material is polyethylene.

**8.** Tube (1) according to Claim 3, **characterised in that** said polymeric material is phenylen polysulphide.

Fig.1

1

Fig.2

2

2

2

## INTERNATIONAL SEARCH REPORT

| International application No. |
|---|
| PCT/ ES 2005/000276 |

| A. CLASSIFICATION OF SUBJECT MATTER |
|---|
| **IPC 7** H02G3/04, F16L11/02 |
| According to International Patent Classification (IPC) or to both national classification and IPC |

| B. FIELDS SEARCHED |
|---|
| Minimum documentation searched (classification system followed by classification symbols) |
| **IPC 7** H02G, F16L |
| Documentation searched other than minimum documentation to the extent that such documents are included in the fields searched |
| Electronic data base consulted during the international search (name of data base and, where practicable, search terms used) |
| CIBEPAT,EPODOC |

### C. DOCUMENTS CONSIDERED TO BE RELEVANT

| Category* | Citation of document, with indication, where appropriate, of the relevant passages | Relevant to claim No. |
|---|---|---|
| X | WO 9114034 A1 (BENTLEY HARRIS MFG CO) 19.09.1991, page 5, lines 23-29, page 7, lines 1-4, figures. | 1-8 |
| X | US 5465710 A (MIYAGI et al.) 14.11.1995, column 3, lines 19-29, 45-48, 55-58, figures 2-4. | 1-8 |
| A | EP 0249333 A1 (RAYCHEM CORP) 16.12.1987, **The whole document** | 1, 3-8 |
| A | US 2003221736 A1 (LAURENT et al.) 04.12.2003, **The whole document** | 1, 2 |

| ☐ Further documents are listed in the continuation of Box C. | **X** See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| **30 SEP 2005 (30.09.05)** | **06 OCT 2005 (06.10.05)** |
| Name and mailing address of the ISA/ **S.P.T.O.** | Authorized officer |
| Facsimile No. | Telephone No. |

Form PCT/ISA/210 (second sheet) (July 1992)

## INTERNATIONAL SEARCH REPORT
Information on patent family members

International Application No

PCT/ ES 2005/000276

| Patent document cited in search report | Publication date | Patent familiy member(s) | Publication date |
|---|---|---|---|
| WO 9114034 A1 | 19.09.1991 | CA 2078121 A1 | 13.09.1991 |
| | | EP 0532500 A1 | 24.03.1993 |
| | | US 5186992 A | 16.02.1993 |
| | | JP 5505000 T | 29.07.1993 |
| | | DE 69109675 D | 14.06.1995 |
| | | ES 2074710 T | 16.09.1995 |
| | | DE 69109675 T | 23.11.1995 |
| | | KR 138249 B1 | 15.05.1998 |
| | | JP 3101680 B | 23.10.2000 |
| US 5465710 A | 14.11.1995 | JP 6319686 A | 22.11.1994 |
| | | JP 3229709 B | 19.11.2001 |
| | | JP 6084413 U | 02.12.1994 |
| | | JP 2596258 Y | 07.06.1999 |
| | | | 07.06.1999 |
| | | | 07.06.1999 |
| US 2003221736 A1 | 04.12.2003 | FR 2838502 A1 | 17.10.2003 |
| | | EP 1355102 A1 | 22.10.2003 |
| | | JP 2004003628 A | 08.01.2004 |
| | | AT 285543 T | 15.01.2005 |
| | | DE 60300228 D | 27.01.2005 |
| | | ES 2233912 T | 16.06.2005 |
| EP 0249333 A1 | 16.12.1987 | JP 62276063 A | 30.11.1987 |
| | | JP 2604746 B | 30.04.1997 |
| | | BR 8702366 A | 17.02.1988 |
| | | US 4754685 A | 05.07.1988 |
| | | DE 3763758 D | 23.08.1990 |
| | | CA 1284043 C | 14.05.1991 |
| | | KR 9600086 B1 | 03.01.1996 |
| | | | 03.01.1996 |

Form PCT/ISA/210 (patent family annex) (July 1992)

7